# EUROPÄISCHE PATENTANMELDUNG

(11) **EP 1 016 567 A2**
(43) Veröffentlichungstag der Anmeldung: **05.07.2000**
(21) Anmeldenummer: 99125961.5
(22) Anmeldetag: 27.12.1999
(51) Int. Cl.: B60R 21/02

(54) **Fahrzeugsicherheitsvorrichtung zum Schutz der Füsse des Insassen**

(30) Priorität: 30.12.1998 DE 29823235 U
(71) Anmelder: TRW Occupant Restraint Systems GmbH & Co. KG, 73553 Alfdorf (DE)
(72) Erfinder: Heilig, Alexander, 73550 Wissgoldingen (DE)
(74) Vertreter: Kitzhofer, Thomas, Dipl.-Ing.

(57) **Zusammenfassung**

Die Erfindung betrifft eine Fahrzeugsicherheitsvorrichtung zum Schutz der Füße eines Insassen, insbesondere eines Fahrers. Die Fahrzeugsicherheitsvorrichtung umfaßt eine Verstellvorrichtung und einen Abschnitt des Fahrzeugbodens im Bereich der Füße des Insassen, der mit der Verstellvorrichtung gekoppelt und durch sie relativ zu den Füßen verlagert werden kann.

## Beschreibung

Die Erfindung betrifft eine Fahrzeugsicherheitsvorrichtung zum Schutz der Füße eines Insassen, insbesondere eines Fahrers.

Die Füße des Insassen sind bei einem Frontalaufprall hohen Belastungen ausgesetzt, denn sie können von einem Pedal abrutschen, durch die sich in den Fußraum des Fahrzeugs verlagernden Pedale belastet werden oder zwischen Pedalen und der sogenannten Spritzwand geklemmt werden. Die Spritzwand ist ein Teil des Fahrzeugbodens, der den Fußraum der Fahrzeugfrontinsassen mitbestimmt. Sie schließt sich an den im wesentlichen horizontalen Abschnitt des Fahrzeugbodens an und verläuft üblicherweise zum Motorraum schräg aufwärts. Die Spritzwand wird auch Feuerwand genannt. Zum Schutz der Füße der Insassen, insbesondere des Fahrers, dessen Füße höheren Gefahren ausgesetzt sind, wird ein Fuß-Gassack vorgeschlagen, der den Fußraum bei einem Unfall teilweise ausfüllen soll. Der Gassack soll im normalen Fahrbetrieb nicht in den Fußraum ragen, da er verletzt werden könnte, soll aber bei einem Unfall aus seiner Abdeckung hervortreten. Die Unterbringung des Gassacks unter einer aufreißbaren Wand ist sehr aufwendig, und zudem ist das Entfaltungsverhalten sehr schwer vorbestimmbar, wobei die im Wege stehenden Pedale die Vorbestimmbarkeit zusätzlich erschweren.

Die Erfindung schafft eine Fahrzeugsicherheitsvorrichzung, die einfacher aufgebaut ist und deren Schutzwirkung nicht von vielen Rahmenbedingungen, wie z.B. der Entfaltungsrichtung eines Gassacks, abhängt. Die erfindungsgemäße Fahrzeugsicherheitsvorrichtung weist eine Verstellvorrichtung und einen Abschnitt des Fahrzeugbodens im Bereich der Füße des Insassen auf, der mit der Verstellvorrichtung gekoppelt ist und durch sie relativ zu den Füßen verlagert werden kann. Im Gegensatz zu einem Gassack, der aus seiner Abdeckung hervortreten muß, ist gemäß der Erfindung vorgesehen, daß ein Abschnitt des Fahrzeugbodens selbst verlagert werden kann. Die Verlagerung des Bodens hat den Vorteil, daß er längs einer vorgegebenen Bahn, z.B. mittels einer Führung, verlagert werden kann. Der verlagerbare Abschnitt des Fahrzeugbodens ist zudem eine definierte, üblicherweise starre Fläche, bei der auch nicht die Gefahr besteht, daß sie sich beim Verlagern undefiniert verformt. Zudem besteht nicht die Gefahr, daß sie, wie bei einem Fußgassack, durch spitze Absätze zerstört wird, denn der stabile Fahrzeugboden ist der Teil der Sicherheitsvorrichtung, der unmittelbaren Kontakt mit den Schuhen des Insassen hat.

Der verlagerbare Abschnitt kann der Spritzwandabschnitt des Fahrzeugbodens sein und/oder derjenige im wesentlichen horizontale Abschnitt des Bodens, auf dem die Füße oder Schuhe des Insassen, genauer gesagt dessen Fersen bzw. die Absätze, aufliegen.

Vorzugsweise ist der verlagerbare Abschnitt des Fahrzeugbodens mit einem doppelten Fahrzeugboden versehen. Dieser hat ein starres äußeres und ein verlagerbares inneres Bodenteil.

Verbindungshebel zwischen den Bodenteilen können die Bewegungsbahn des inneren Bodenteils vorgeben und darüber hinaus als Deformationselemente dienen. Auch das verlagerbare Bodenteil selbst kann selbstverständlich bei einem Unfall vorbestimmbar deformiert werden.

Insbesondere auf der Fahrerseite ist der verlagerbare Fahrzeugboden sehr wirksam. Wenn der Spritzwandabschnitt bis zu den Pedalen verlagert wird, können nämlich die Pedaltrittflächen und der verlagerte Abschnitt im wesentlichen eine Fläche bilden. Die Füße können damit nicht mehr zwischen die Pedale und dem Spritzwandabschnitt gelangen und auch nicht mehr von den Pedalen abrutschen.

Die Ausführungsformen der Erfindung arbeiten mit zwei unterschiedlichen Prinzipien. Das erste Prinzip sieht vor, daß die Verstellvorrichtung für den normalen Fahrbetrieb ausgeführt ist und eine reversible Verstellung des verlagerbaren Abschnitts zur Anpassung an die Sitzposition des Insassen erlaubt. Die Verstellvorrichtung wird also nicht erst bei einem Unfall ausgelöst, sondern der Fahrzeugboden wird z.B. für einen kleinen Insassen zu ihm hin verstellt, so daß dessen Fußraum kleiner ist als bei einem großen Insassen. Durch die Verstellung des horizontalen Abschnitts läßt sieh beispielsweise die Winkelstellung zwischen Fuß und Unterschenkel optimieren, die bei einem kleinen Insassen aufgrund seiner Sitzposition bislang immer deutlich schlechter als bei einem großen Insassen war. Kleine Insassen treten nämlich meist sehr stark von oben auf die Pedale und müssen die Ferse anheben, wenn sie z.B. zwischen Bremspedal und Gaspedal wechseln wollen. Der Winkel zwischen dem Fuß und dem Unterschenkel ist zudem gering, was die Verletzungsgefahr erhöht. Das zweite Prinzip sieht eine Verlagerung eines Abschnitts des Fahrzeugbodens bei einem Unfall vor. Dabei ist es insbesondere wichtig, daß der Spritzwandabschnitt so weit zu den Pedalen verlagert wird, daß die Füße nicht mehr zwischen Spritzwandabschnitt und Pedalen gequetscht werden können.

In Ergänzung zum oben genannten ersten Prinzip kann eine noch bessere Schutzwirkung erlangt werden, wenn diese Sicherheitsvorrichtung nach der Erfindung mit verstellbaren Pedalen versehen ist. Die verstellbaren Pedale sollen für den normalen Fahrbetrieb eine reversible Verlagerung der Pedale zu und weg vom Fahrzeugsitz ermöglichen, so daß die Lage der Pedale an den Insassen, seine Größe oder Sitzposition angepaßt werden kann. Die Verstellbarkeit des Fahrzeugbodens in Verbindung mit der Verstellbarkeit der Pedale erlaubt es kleinen wie sehr großen Insassen, ihre Sitzposition zu optimieren. Bislang waren die Pedale der Fixpunkt im Fahrzeug, an dem sich die Sitzposition orientieren mußte. Dies führte nicht nur zu einer schlechten Position der Beine und Füße, sondern auch des Oberkörpers. Kleine Insassen sitzen bislang nämlich zu nahe am Lenkrad, so daß der sich entfaltende Lenkrad-Gassack ein Gefahrenpotential bilden kann. Mit der erfindungsgemäßen Sicherheitsvorrichtung läßt sich der Abstand zum Lenkrad optimieren, denn die Pedale sowie der Fahrzeugboden werden der Sitzposition, die durch die Größe des Insassen mitbestimmt wird, angepaßt. Dies hat auch den Vorteil, daß bei in Richtung zum Sitz verschobener Pedale samt Spritzwandabschnitt mehr Raum zur Deformation des vorderen Teils des Fahrzeugs zur Verfügung steht, bis Teile in den Fußraum dringen. Die Verstellung des Fahrzeugbodens kann per Hand, mit der Verstellung des Sitzes, horizontal und/oder vertikal, mechanisch oder elektrisch erfolgen. Die Pedale sollen vorzugsweise schräg aufwärts in Richtung Lenkrad verstellt werden, so daß unterschiedlich große Fahrer immer denselben Winkel zwischen Fuß und Unterschenkel haben.

Für das oben genannte zweite Prinzip ist es vorteilhaft, wenn ein Linearantrieb (z.B. ein herkömmlicher Linearstraffer oder ein Federantrieb) den verlagerbaren Abschnitt verschiebt.

Darüber hinaus ist es aber auch möglich, z.B. zwischen dem inneren und äußeren Bodenteil einen Gassack vorzusehen, der das innere Bodenteil verschiebt.

Die Verschiebung eines Abschnitts des Bodens kann mit einer Entkoppelung der Pedale einhergehen, z.B. indem der verlagerbare Abschnitt am Ende seines Verstellweges die Pedale von ihrer Aufhängung entkoppelt oder die Pedale abreißt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine schematische Seitenansicht des mit der erfindungsgemäßen Fahrzeugsicherheitsvorrichtung ausgestatteten Fahrzeugs, wobei die Vorrichtung für den normalen Fahrbetrieb verstellbar ausgerichtet ist und in Figur 1 auf einen großen Insassen abgestimmt ist,
Figur 2 die in Figur 1 gezeigte Vorrichtung bei kleinem Insassen,
Figur 3 eine gegenüber den Figuren 1 und 2 geringfügig modifizierte erfindungsgemäße Fahrzeugsicherheitsvorrichtung,
Figur 4 eine gegenüber den ersten Figuren nach einem anderen Prinzip arbeitende erfindungsgemäße Sicherheitsvorrichtung, die erst bei einem Unfall aktiviert wird,
Figur 5 eine schematische Seitenansicht der Vorrichtung nach Figur 4 vor dem Aktivieren der Sicherheitsvorrichtung,
Figur 6 eine schematische Seitenansicht entsprechend Figur 5, nachdem die Sicherheitsvorrichtung aktiviert worden ist,
Figur 7 eine schematische Seitenansicht einer anderen Ausführungsform der erfindungsgemäßen Sicherheitsvorrichtung, die erst bei einem Unfall aktiviert wird, und
Figur 8 eine Perspektivansicht einer weiteren Ausführungsform der Sicherheitsvorrichtung, die ebenfalls erst bei einem Unfall aktiviert wird.

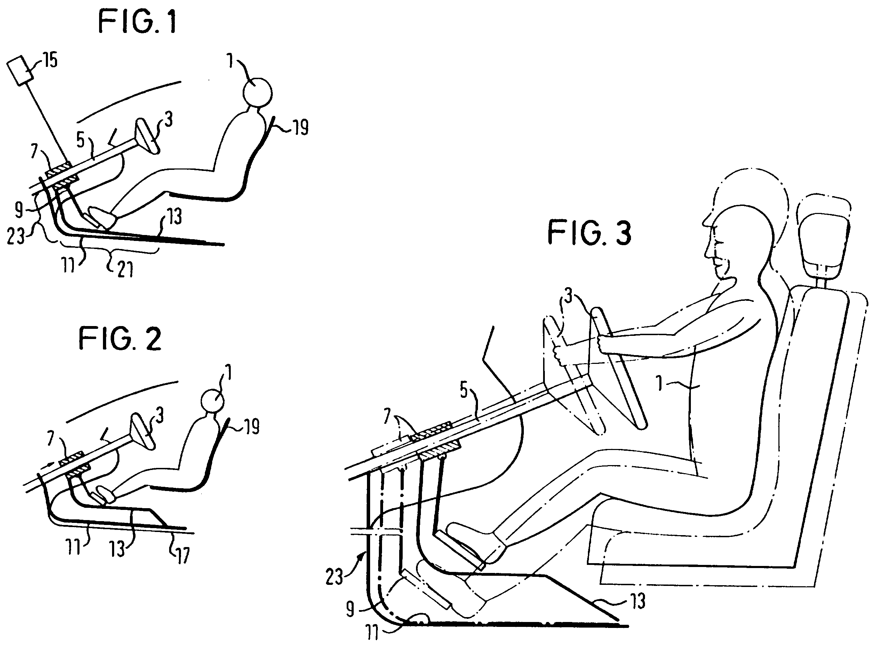

In Figur 1 ist eine Fahrzeugsicherheitsvorrichtung zum Schutz der Füße eines Fahrers 1 dargestellt. Mit 3 ist das Fahrzeuglenkrad und mit 5 die Lenkwelle samt außenseitiger Lagerung dargestellt. Der Begriff Lenkwelle wird im folgenden sowohl für das sich drehende innere Teil, die eigentliche Welle, als auch für die rohrförmige Lagerung, in der das innere Teil sitzt, verwendet. Die Lenkwelle dient der Lagerung einer auf ihr entlang schräg nach oben in Richtung des Insassen und zurück schräg nach unten verschiebbaren Fahrzeugsicherheitsvorrichtung. Die Fahrzeugsicherheitsvorrichtung umfaßt einen die Lenkwelle umgebenden und auf ihr gleitenden Schlitten 7 und an ihm befestigte Pedale 9 (Bremspedal, Gaspedal und gegebenenfalls Kupplung) sowie einen doppelten Fahrzeugboden im Bereich der Füße des Insassen. Der Fahrzeugboden umfaßt ein starres äußeres Bodenteil 11 sowie ein verlagerbares inneres Bodenteil 13. Das Bodenteil 13 ist in seiner Form der des äußeren Bodenteils 11 angepaßt. Bei einem großen Insassen, wie dies in Figur 1 gezeigt ist, liegt das innere Bodenteil 13 fast oder sogar unmittelbar am äußeren Bodenteil 11 an. Wenn jedoch ein durchschnittlich großer oder ein kleiner Insasse, wie dies in Figur 2 dargestellt ist, dasselbe Fahrzeug fahren möchte, lassen sich der Schlitten 7 und mit ihm die Pedale 9 und das innere Bodenteil 13 schräg aufwärts längs der Lenkwelle 5 verlagern.

Die Verlagerung kann z.B. mittels eines Elektroantriebs 15 erfolgen, der schematisch in Figur 1 dargestellt ist, oder über einen Bowdenzug 17, der mit dem Fahrersitz 19 gekoppelt ist. Der Bowdenzug 19 kann beim horizontalen und/oder vertikalen Verstellen des Fahrzeugsitzes zu einer Verstellung des Schlittens 7 führen.

Als Führung für Pedale 9 und Bodenteil 13 kann auch eine separate Führung vorgesehen sein, es muß nicht zwingend die Lenkwelle 5 als Führung verwendet werden. Für die Pedale 9 und das innere Bodenteil 13 dient der Elektromotor 15 in Verbindung mit dem Schlitten 7 oder der Bowdenzug 17 in Verbindung mit dem Schlitten 7 als Verstellvorrichtung.

Der Fahrzeugboden im Bereich der Füße des Insassen besteht im wesentlichen aus zwei ineinander übergehenden Abschnitten, nämlich einem im wesentlichen horizontalen Abschnitt 21, auf dem die Fersen des Fahrers 1 aufliegen, und einem sich daran schräg aufwärts in Richtung Motor anschließenden Spritzwandabschnitt 23, auch Feuerwand genannt, die sich hinter den Pedalen 9 nach oben erstreckt.

Bei der in den Figuren 1 und 2 dargestellten Ausführungsform sind die Abschnitte 21 und 23 des inneren Bodenteils 13 einstückig miteinander verbunden, und sie werden gemeinsam schräg aufwärts und, reversibel, schräg abwärts, abgestimmt auf die Sitzposition (damit auf die Größe des Insassen) vor dem Losfahren verstellt. Wäre die Sicherheitsvorrichtung für den in Figur 2 gezeigten, sehr kleinen Insassen so eingestellt, wie dies in Figur 1 dargestellt ist, müßte der Insasse seinen Sitz 19 sehr weit nach vorne schieben. Er säße sehr nahe am Lenkrad 3. Seine Unterschenkel würden sehr steil abwärts verlaufen und einen deutlich geringeren Winkel mit den Füßen einnehmen als in der optimierten, in Figur 2 dargestellten Stellung. Der Gassack, welcher im Lenkrad 3 untergebracht ist, könnte den Insassen verletzen, zudem würde es bei einer Verlagerung des Spritzwandabschnitts 23 oder einer Verlagerung der Pedale 9 aufgrund des geringen Winkels Fuß zu Unterschenkel leicht zu Verletzungen des Fußes kommen.

Durch die Sicherheitsvorrichtung können extrem große Insassen wie extrem kleine Insassen immer eine optimale Sitzposition erreichen, so daß der Winkel des Unterschenkels zur Horizontalen und insbesondere der Winkel zwischen Unterschenkel und Füßen optimiert bzw. nicht zu klein werden kann. Die Fahrsicherheit wird gerade für kleine Insassen deutlich erhöht, denn diese haben bislang oft die Füße vom Fahrzeugboden abheben müssen, wenn sie ein anderes Pedal betätigen wollten, was die Reaktionszeit verschlechterte. Für große Insassen hingegen war es leicht, z.B. lediglich den Fuß leicht vom Pedal zu nehmen und ihn um die am Fahrzeugboden weiter aufsitzende Ferse zu schwenken, um schnell das benachbarte Pedal zu treten.

Das innere Bodenteil 13 ist relativ starr und kann vom Insassen nicht zerstört werden. Für kleine Insassen ergibt sich zudem der Vorteil, daß die Füße und die ganze Sitzposition weiter hinten liegen als bei herkömmlichen Fahrzeugen, so daß bei einem Frontalaufprall eine größere Knautschzone zur Verfügung steht, bis es schließlich zu Deformation des Spritzbandabschnitts 23 oder zu einer Verlagerung der Pedale 9 kommt.

Die in Figur 3 dargestellte Ausführungsform entspricht im wesentlichen der in Figur 2 dargestellten. In Figur 3 sind die Positionen der Sicherheitsvorrichtung bei großen und bei kleinen Insassen in einer Figur dargestellt.

Im Vergleich zu der in den Figuren 1 und 2 dargestellten Ausführungsform ist bei dieser Ausführungsform das Lenkrad 3 höhenverstellbar sowie zudem auch noch dank einer teleskopartigen, nicht gezeigten Lagerung axial in bezug auf die Lenkwelle 5 verschiebbar ausgebildet. Auch bei dieser Ausführungsform sitzt der Schlitten 7 auf der Lenkwelle 5. An ihm sind Pedale 9 und Spritzwandabschnitt 23 befestigt. Auch hier ist zu sehen, daß die Winkel der Unterschenkel und der Füße bei großen und bei kleinen Insassen zur Horizontalen etwa gleich sind.

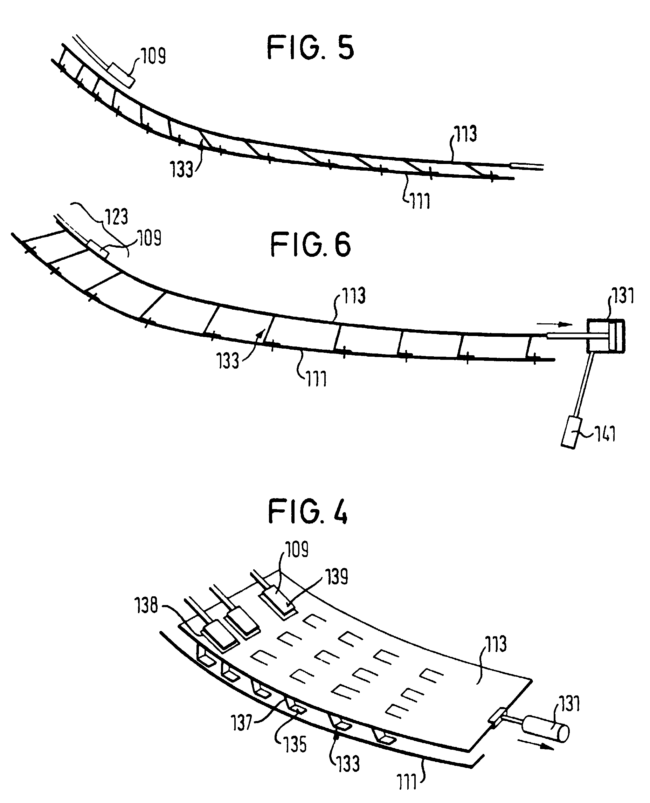

Während die in den Figuren 1 bis 3 dargestellten Ausführungsformen ein reversibles Verstellen der Pedale und des Abschnitts des Fahrzeugbodens nahe der Füße des Fahrers für den normalen Fahrbetrieb ermöglichen, ist die in Figur 4 dargestellte Ausführungsform zur Aktivierung nur im Crashfall vorgesehen.

Auch diese Ausführungsform der Fahrzeugsicherheitsvorrichtung arbeitet mit einem doppelten Fahrzeugboden im Bereich der Füße des Insassen. Der verlagerbare Abschnitt des Fahrzeugbodens beginnt ebenfalls vorderhalb des Sitzes und erstreckt sich bis hinterhalb der Pedale schräg nach oben. Die Sicherheitsvorrichtung hat im Gegensatz zu der zuvor beschriebenen keine verstellbaren Pedale. Sie umfaßt ein starres inneres Bodenteil 113, ein starres äußeres Bodenteil 111, einen Linearstraffer 131, der am inneren Bodenteil 113 befestigt ist und sich unter den Sitz des Insassen erstreckt und einen Linearantrieb darstellt. Das innere Bodenteil 113 ist über zahlreiche, an der gesamten Unterseite des inneren Bodenteils 113 verteilt angeordnete Verbindungshebel 133 mit dem äußeren Bodenteil 111 verbunden. Die Verbindungshebel 133 sind an der Unterseite des inneren Bodenteils 113 schwenkbar befestigte Kunststoffstreifen, die einen abgewinkelten Fuß 135 haben, mit dem sie an der Oberseite des äußeren Bodenteils 111 befestigt sind. Zwischen dem Fuß 135 und dem sich daran anschließenden Abschnitt 137 ist ein Scharnier gebildet. Im nicht betätigten Zustand (vgl. Figur 5) sind die Verbindungshebel 133 großteils schräg gelegt, denn das innere Bodenteil 113 liegt fast am äußeren Bodenteil 111 an. Mit 109 sind die Pedale bezeichnet.

Bei einem Frontalaufprall wird der Linearstraffer 131 betätigt, der das innere Bodenteil 113 nach rechts, d.h. in Richtung zum Fahrersitz verschiebt. Die Verbindungshebel 133 geben die Bewegungsbahn des inneren Bodenteils 113 vor. Das Bodenteil 113 bewegt sich aufwärts und auch in Richtung zum Fahrzeugsitz. Die Verbindungshebel 133 stellen sich auf und stabilisieren das innere Bodenteil 113. Das innere Bodenteil wird so weit verlagert, daß es an die Pedale 109 stößt. Um die Pedale herum weist das innere Bodenteil, wie in Figur 4 zu sehen ist, elastische, der Form der Pedale und deren Trittflächen 139 angepaßte Bereiche 138 auf. Wenn das innere Bodenteil 113 im Bereich des Spritzwandabschnitts 123 auf die Pedale trifft, gibt es im Bereich 138 nach. Nach dem vollständigen Verlagern des inneren Bodenteils 113 ergibt sich ein stufenloser Übergang zwischen den Pedaltrittflächen 139 und dem Spritzwandabschnitt 123. Die Füße des Insassen können nicht mehr von den Pedalen 109 abrutschen und mit hoher Geschwindigkeit auf den Spritzwandabschnitt 123 treffen, wie dies bei herkömmlichen Fahrzeugen der Fall ist. Darüber hinaus können sich die Füße des Insassen auch nicht mehr zwischen den Pedalen 109 und dem Spritzwandabschnitt 123 verklemmen. Die Verbindungshebel 133 sind so ausgebildet, daß sie bei einer Deformation des äußeren Bodenteils 111, also bei einem sehr schweren Unfall, als Deformationselemente dienen, indem sie gezielt plastisch verformbar sind.

Der bei dieser Ausführungsform dargestellte Linearstraffer 131 ist mit einem Gasgenerator 141 gekoppelt (vgl. Figur 6), welcher eine schnelle Verlagerung des inneren Bodenteils 113 ermöglicht. Der Linearstraffer 131 kann als ein für einen Gurtstraffer verwendbarer Linearstraffer ausgebildet sein, wie er in der Fahrzeugsieherheitstechnik bekannt ist. Das innere Bodenteil 113 kann im Bereich 138, d.h. um die Pedale herum auch eine Ausnehmung aufweisen oder eine vorbestimmbare Aufreißlinie haben. Die Ausführungsform gemäß Fig. 6 kann abgeändert werden, indem der Gasgenerator 141 durch eine pneumatische oder hydraulische Energiequelle ersetz wird, die den Zylinder in die Lage verstzt, das Bodenteil 113 auf Anforderung des Fahrzeuginsassen zu bewegen.

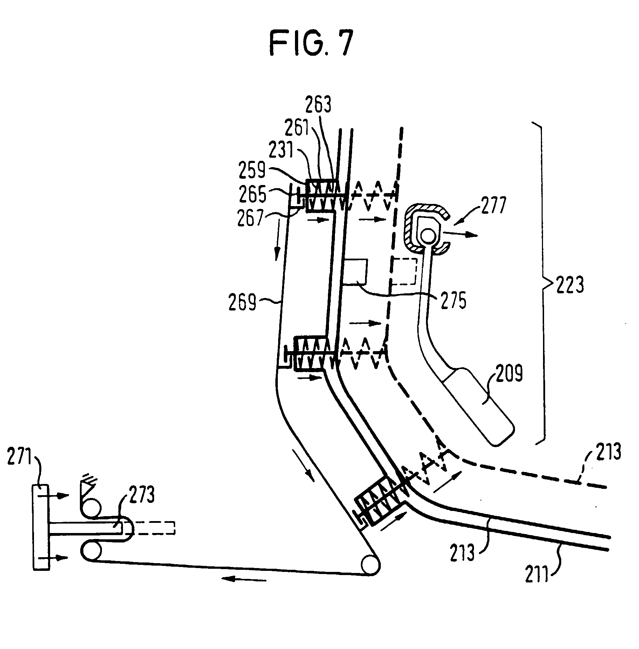

Die in Figur 7 dargestellte Ausführungsform arbeitet ohne einen Linearstraffer. Als Linearantrieb sind mehrere vorgespannte Druckfedern 231 vorgesehen, die in Taschen 261 im äußeren Bodenteil 211 sitzen. Das innere Bodenteil 213 hat angeformte Lagerstifte 263, die sich durch die Federn 231 und durch den Boden 259 der Taschen 261 erstrecken. Die Lagerstifte 263 haben an ihrem freien Ende einen Fortsatz 265, der von einem Haken 267 einer Lösevorrichtung hintergriffen wird. Die Lösevorrichtung besteht aus einem Band 269, welches über Umlenkrollen in den vorderen Teil des Fahrzeugs verläuft. Bei einem Unfall wird ein Schieber 271 in Pfeilrichtung verschoben. Das Band 269 wird durch einen Schieberfortsatz 273, der auf das Band 269 wirkt, in Pfeilrichtung verschoben. Die Haken 267 werden so weit verschoben, bis die Lagerstifte 263 nicht mehr arretiert sind. Durch die Kraft der Federn 231 wird das innere Bodenteil 213 abrupt in Pfeilrichtung einerseits aufwärts und andererseits horizontal zum Fahrzeugsitz verschoben. Damit die verschiedenen Bewegungsrichtungen der Federn sich nicht gegenseitig behindern, können auch Knickbereiche am inneren Bodenteil 213 vorgesehen sein. Bei der Verlagerung des Spritzwandabschnitts 223 annähernd horizontal zum Fahrzeugsitz in die mit unterbrochenen Linien gezeigte Stellung trifft ein Fortsatz 275 am inneren Bodenteil 213 auf die Pedale 209 nahe ihrer Aufhängung 277. Die Pedale werden dadurch aus ihrer deformierbar ausgebildeten Aufhängung 277 gerissen und von ihr entkoppelt, so daß sie sich nicht bei einem schweren Unfall in Richtung Füße des Insassen verlagern können.

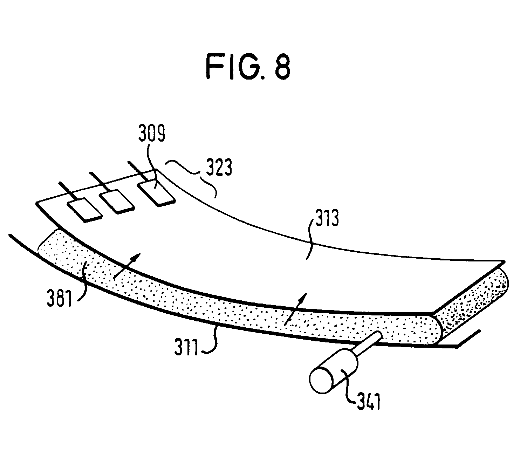

Die in Figur 8 gezeigte Ausführungsform arbeitet ebenfalls mit einem doppelten Fahrzeugboden, wobei zwischen dem inneren Bodenteil 313 und dem äußeren Bodenteil 311 ein langgestreckter, großflächiger Gassack 381 untergebracht ist. Das innere Bodenteil 313 ist ein starrer großflächiger Kunststoffkörper, der auch von spitzen Damenabsätzen nicht durchstoßen werden kann. Bei einem Unfall und im normalen Fahrbetrieb wird der Gassack 381 über einen Gasgenerator 341 bzw. eine pneumatische Druckquelle aufgeblasen. Das innere Bodenteil 313 wird dadurch zum Teil nach oben und zum Teil in Richtung des Fahrzeugsitzes verschoben, so daß kein Abstand mehr zwischen den Pedalen 309 und dem Spritzwandabschnitt 323 vorhanden ist. Der Gassack 381 kann am inneren und/oder äußeren Bodenteil 313, 311 befestigt sein und in seinem Inneren Fangbänder aufweisen, die die Ausdehnung des Gassacks 381 begrenzen.

Nach den dargestellten Verstellvorrichtungen in Form des Linearstraffers 131 (Figuren 4 bis 6), der vorgespannten Federn 231 (Figur 7) und des Gassacks 381 samt Gasgenerator 341 (Figur 8) sind auch andere Verstellvorrichtungen denkbar, wie z.B. die Koppelung des in Figur 7 gezeigten Bandes 269 unmittelbar mit dem inneren Bodenteil 213.

## Patentansprüche

1. Fahrzeugsicherheitsvorrichtung zum Schutz der Füße eines Insassen, insbesondere eines Fahrers, mit
einer Verstellvorrichtung und
einem Abschnitt des Fahrzeugbodens im Bereich der Füße des Insassen, der mit der Verstellvorrichtung gekoppelt und durch sie relativ zu den Füßen verlagert werden kann.

2. Fahrzeugsicherheitsvorrichtung nach Anspruch 1, dadurch gekennzeichnet, daß ein verlagerbarer Abschnitt des Fahrzeugbodens der Spritzwandabschnitt (23; 123; 223; 323) des Fahrzeugbodens ist.

3. Fahrzeugsicherheitsvorrichtung nach Anspruch 1 oder 2, dadurch gekennzeichnet, daß ein verlagerbarer Abschnitt des Fahrzeugbodens der im wesentlichen horizontale Abschnitt (21) des Fahrzeugbodens ist, auf dem die Füße des Insassen aufliegen.

4. Fahrzeugsicherheitsvorrichtung nach einem der vorhergehenden Ansprüche, dadurch gekennzeichnet, daß der verlagerbare Abschnitt ein im wesentlichen starres Bodenteil ist, welches einen im wesentlichen horizontalen Abschnitt (21), auf dem die Füße des Insassen liegen, sowie einen sich daran anschließenden, schräg aufwärts verlaufenden Spritzwandabschnitt (23; 123; 223; 323) aufweist.

5. Fahrzeugsicherheitsvorrichtung nach einem der vorhergehenden Ansprüche, dadurch gekennzeichnet, daß der verlagerbare Abschnitt einen doppelten Fahrzeugboden aufweist, mit einem starren äußeren Bodenteil (11; 111; 211; 311) und einem verlagerbaren inneren Bodenteil (13; 113; 213; 313).

6. Fahrzeugsicherheitsvorrichtung nach Anspruch 5, dadurch gekennzeichnet, daß zwischen den Bodenteilen (111, 113) Verbindungshebel (133) vorgesehen sind, die die Bewegungsbahn des inneren Bodenteils (113) vorgeben.

7. Fahrzeugsicherheitsvorrichtung nach Anspruch 6, dadurch gekennzeichnet, daß die Verbindungshebel (133) bei einem Unfall und einer Deformation des äußeren Bodenteils (111) deformierbar sind.

8. Fahrzeugsicherheitsvorrichtung nach einem der vorhergehenden Ansprüche, dadurch gekennzeichnet, daß die Verstellvorrichtung so ausgebildet ist, daß sie im normalen Fahrbetrieb eine reversible Verstellung des verlagerbaren Abschnitts des Fahrzeugbodens zur Anpassung desselben an die Sitzposition des Insassen erlaubt.

9. Fahrzeugsicherheitsvorrichtung nach Anspruch 8, dadurch gekennzeichnet, daß die Verstellvorrichtung vom Insassen betätigt werden kann.

10. Fahrzeugsicherheitsvorrichtung nach Anspruch 8 oder 9, dadurch gekennzeichnet, daß die Verstellvorrichtung mit dem Fahrzeugsitz gekoppelt ist und bei dessen horizontaler und/oder vertikaler Verstellung mitverstellt wird.

11. Fahrzeugsieherheitsvorrichtung nach einem der vorhergehenden Ansprüche, gekennzeichnet durch reversibel verstellbare Pedale, die in Richtung zum Sitz und von diesem weg zur Anpassung an die Sitzposition des Insassen verstellt werden können.

12. Fahrzeugsicherheitsvorrichtung nach Anspruch 11, dadurch gekennzeichnet, daß die Pedale (9) einen Verstellweg in Richtung zum Insassen schräg aufwärts haben.

13. Fahrzeugsieherheitsvorrichtung nach Anspruch 12, dadurch gekennzeichnet, daß die Pedale (9) auf der Lenkwelle (5) oder der Lagerung der Lenkwelle (5) verschiebbar gelagert sind.

14. Fahrzeugsicherheitsvorrichtung nach einem der Ansprüche 11 bis 13, dadurch gekennzeichnet, daß ein verlagerbarer Abschnitt des Fahrzeugbodens der Spritzwandabschnitt (23) ist und daß der Spritzwandabschnitt (23) mit den verstellbaren Pedalen (9) so gekoppelt ist, daß der verlagerbare Abschnitt und die Pedale (9) gemeinsam verlagert werden.

15. Fahrzeugsicherheitsvorrichtung nach einem der vorhergehenden Ansprüche, mit Pedalen (209) und einer Aufhängung (277) der Pedale, die so zu dem verlagerbaren Abschnitt ausgerichtet sind, daß dieser am Ende seines Verstellweges die Pedale (209) von ihrer Aufhängung (277) entkoppelt.

16. Fahrzeugsicherheitsvorrichtung nach einem der vorhergehenden Ansprüche, dadurch gekennzeichnet, daß die Verstellvorrichtung bei einem Unfall aktiviert wird und den verlagerbaren Abschnitt in Richtung zum Fahrzeugsitz bewegt.

17. Fahrzeugsicherheitsvorrichtung nach einem der vorhergehenden Ansprüche, dadurch gekennzeichnet, daß die Verstellvorrichtung einen Linearantrieb aufweist, der den verlagerbaren Abschnitt verschiebt.

18. Fahrzeugsicherheitsvorrichtung nach Anspruch 16, dadurch gekennzeichnet, daß die Verstellvorrichtung einen Gassack (381) aufweist, der unter dem verlagerbaren Abschnitt des Fahrzeugbodens angeordnet ist.

19. Fahrzeugsicherheitsvorrichtung nach einem der Ansprüche 16 bis 18, dadurch gekennzeichnet, daß die Sicherheitsvorrichtung auf der Fahrerseite vorgesehen ist, ein verlagerbarer Abschnitt des Fahrzeugbodens der Spritzwandabschnitt (123, 223, 323) ist, der bei einem Unfall bis zu den Pedalen (109; 209; 309) verlagert wird, so daß die Füße des Insassen nicht mehr zwischen den Pedalen (109; 209; 309) und dem Spritzwandabschnitt (123; 223; 323) gelangen können.
